# EUROPEAN PATENT APPLICATION

(11) **EP 4 335 291 A1**
(43) Date of publication of application: **13.03.2024**
(21) Application number: 22203605.5
(22) Date of filing: 25.10.2022
(51) Int. Cl.: A01K 85/02, A01K 83/00

(54) **SEAWEED GUARD DEVICE FOR FISHHOOK**

(30) Priority: 11.03.2022 DK PA202200204; 19.05.2022 DK PA202200469
(71) Applicant: Dannesboe Design, 5592 Ejby (DK)
(72) Inventor: Dannesboe, Lars, 5592 Ejby (DK)
(74) Representative: Larsen & Birkeholm A/S

(57) **Abstract**

The present invention relates to a seaweed guard device (1) developed for fishhooks (7) and to prevent/reduce unintentional catch of among other things seaweed. The seaweed guard device comprises a neck (4) with a longitudinal channel (2) for receiving the shank (10) of a fishhook, a hook point guard device (1) and a plurality of slits (3) formed in the neck along the longitudinal channel. The slits are adapted for receiving the bottom part of the eye (8) of a fishhook (7).

## Description

### The technical field of the invention

The present invention relates to a seaweed guard device for fishhooks.

### Background of the invention

N0309791, US6032402, US4796378, SE132969, DE3919853 all describe known techniques for preventing seaweed from getting stuck on the hook. The problem with these solutions is that the individual arms above the points of the hooks can be displaced laterally, whereby the protection may disappear during use.

### Object of the invention

The purpose of the present invention is to solve the above-mentioned problem. The present invention differs from the existing seaweed guard devices by being fixed on the hook in such a way that the individual arms above the points of the hooks cannot be changed easily.

### Description of the invention

A first aspect of the present invention relates to a seaweed guard device for a fishhook comprising:
- a neck with a longitudinal channel for receiving the shank of a fishhook; wherein the neck comprises a first end and a second end; and
- a hook point guard device with a first end and a second end, wherein the first end is mounted on the first end of the neck, and wherein the second end extends from the neck and towards the second end of the neck;
wherein the neck further comprises a plurality of slits formed in the first end of the neck along the longitudinal channel, wherein the slits are adapted for receiving the bottom part of the eye of a fishhook.

A second aspect relates to a seaweed guard device for a fishhook that comprises a neck with a channel, slits, and an anchor point or anchor area (such as a ring-shaped recess).

The construction of the seaweed guard device is designed so that removing and attaching it on the right hook size can be performed easily and without the use of tools. The channel and the slits provide suitable clamping on the arm and positioning of the hook in relation to the points of the hooks.

Channel, slits, and anchor point or anchor area will ensure a quick mounting and secure fixation of the seaweed guard device to the hook.

The design of the neck, in relation to diameter and height, prevents the material from cracking when mounting it on the right hook size. The seaweed guard device is easy to attach and remove, and no tools are required.

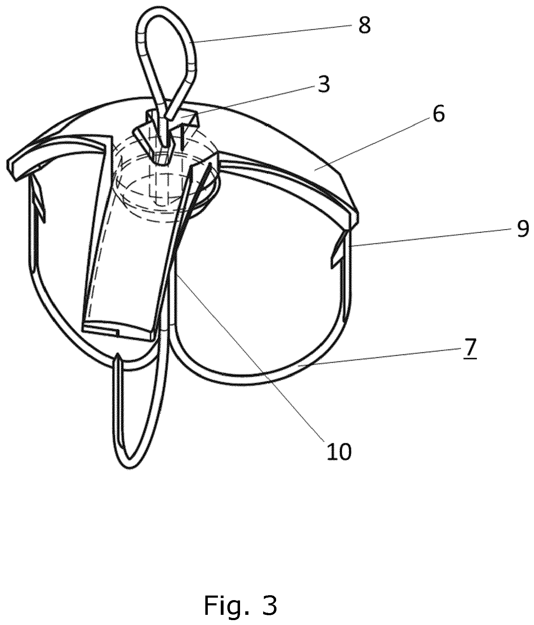

In one or more embodiments, the seaweed guard device comprises a guard device - a hook point guard device as shown in Figure 3.

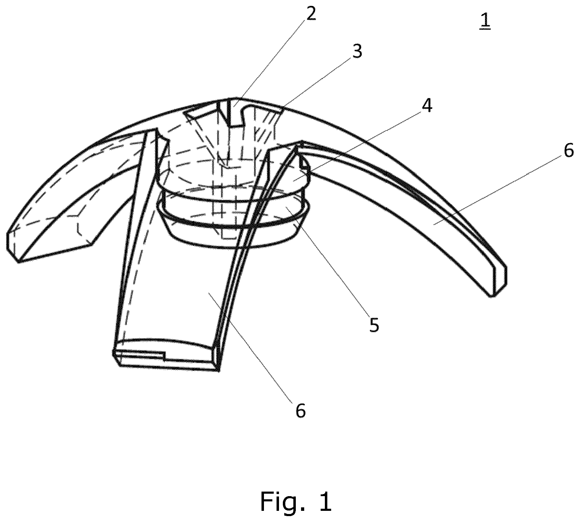

In one or more embodiments, the hook point guard device extends from the neck in an arc towards the second end of the neck, as for example shown in Figures 1 and 3.

In one or more embodiments, the hook point guard device extends from the neck in an arc towards and past the second end of the neck, as for example shown in Figures 1 and 3.

The overall conical design of the hook point guard devices is essential for the passage of the seaweed guard device through water and for the impact from obstacles in the water. The closer the hook point guard device comes to the points of the hooks, the more flexible these become and provide unhindered hooking opportunities from fish.

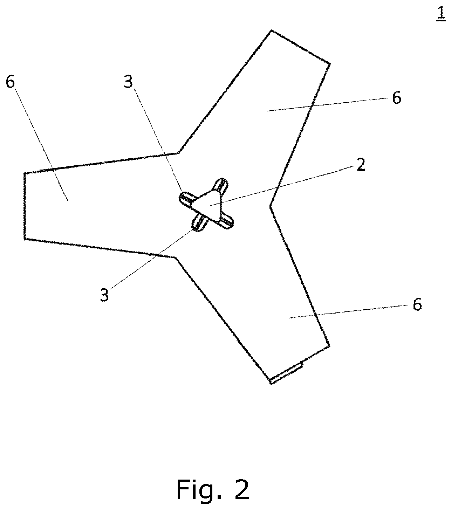

In one or more embodiments, the longitudinal channel comprises a triangular cross section profile, as for example shown in Figure 2.

By using the seaweed guard device that partly protects against moving plants or plant parts in the water, and partly is designed to collapse when a fish bites its jaws around the bait and again return to the original shape when the fish is taken off the hook, the catching opportunities are increased considerably.

The seaweed guard device is made of an elastic material, such as a rubber, silicone, or the like elastomeric polymer, that can be deformed by an attacking fish and after release return to its original shape.

In one or more embodiments, the neck comprises an anchor point or anchor area adapted for receiving a wire for further fastening of the hook. Hereby the seaweed guard device can be attached more safely to the hook.

In one or more embodiments, the slits form an angle of 90 degrees between each other, as for example shown in Figure 2.

In one or more embodiments, the hook point guard devices comprise a relatively wide first end and a relatively narrower second end. This provides greater stiffness at the top of the neck and less downwards towards the points of the hooks.

In one or more embodiments, the slits cut through the longitudinal channel, as for example shown in Figures 1 and 2. Preferably, the slits are relatively wider at the first end of the neck and then become gradually narrower, as for example shown in figures 1 and 2.

A third aspect of the present invention relates to the use of a seaweed guard device according to the present invention for protection of the hook of a lure, a jig, a spinner or the like.

A fourth aspect of the present invention relates to a lure, a jig, a spinner or the like comprising:
- a hook; and
- a seaweed guard device according to the present invention.

### Description of the figures

Figure 1: Perspective view of a guard device according to the present invention.
Figure 2: Top view of a guard device according to the present invention.
Figure 3: Perspective view of a hook with a mounted guard device according to the present invention.

### References

- 1: Seaweed guard device
- 2: Channel
- 3: Slit
- 4: Neck
- 5: Anchor area
- 6: Hook point guard device
- 7: Hook
- 8: Eye
- 9: Hook point
- 10: Shank

### Detailed description of the invention

As can be seen exemplified in Figure 1, the seaweed guard device 1 comprises a neck 4 with a channel 2 (here triangular, better seen in Figure 2), a number of slits 3 - here two extending across the width of the channel 2, and a number of hook point guard devices 6.

The two slits 3 are suitable for receiving or covering the bottom part of the eye 8 of the hook 7 as may be understood from Figure 3, where the hook eye 8 is not yet complete in position within the slits 3. The slits 3 also serve as guides for a correct positioning The triangular channel 2 will clamp lightly around the shank 10 of a triple hook 7 consisting of three joined pieces of metal wire that form a triangle with rounded corners. The triangular channel 2 helps lock and attach the seaweed guard device 1 to the hook 7.

Triple hooks are produced in different ways. In one type, the eye on the hook is formed by two of the metal wires, and the third hook is welded onto these. In a second type, the eye is formed on one wire only, and here the other two are welded onto this as seen in Figure 3. The two slits 3 take this difference into account, thereby allowing both these two hook types to be used with the seaweed guard device 1. The slits 3 form an angle of 90 degrees between each other, which is necessary for allowing the optional choice of a hook type. The seaweed guard device 1 must of course fit the prescribed hook size. The slits 3 hold/lock the hook point guard devices 1 in the right position.

The seaweed guard devices cannot last forever and will eventually wear/age and will be able to move on the hook. An anchor area 5 in the form of a ring-shaped recess is designed for extra fastening on the neck 4, making it possible to clamp the neck 4 around the shank 10 of the hook 7 by means of a fastened wire (not shown) and hereby avoid slipping.

Figure 3 shows the hook 7 and seaweed guard device 1 assembled, but where the eye 8 of the hook 7 has not yet been pushed slightly down into one of the slits 3. When the hook eye 8, depending on the type, is approximately 1/3 down into the slit 3, the seaweed guard device 1 is mounted correctly.

This seaweed guard device 1 is also different - compared to existing seaweed guard devices - in relation to the individual hook point guard devices 6. The hook point guard devices 6 have been made wider, where they meet the neck 4, and this provides greater stiffness at the top of the neck and less stiffness downwards towards the points of the hook. In other words, unintentional lateral deflection is prevented.

In addition to the mentioned triple hooks, there are also double hooks that can be protected according to the same principle.

The construction of the seaweed guard device 1 is designed so that removing it from and attaching it to the right hook size can be performed easily and without the use of tools. The channel 4 and the slits 3 provide suitable clamping on the shank 10 of the hook 7 and positioning in relation to the hook points 9.

These construction principles can also be used on double hooks. The arm of a double hook consists of just two joined pieces of metal wire. These metal wires fit into the triangular channel of the seaweed guard device, are locked, and clamped, and one of the slits 3 catches the eye of the hook and secures the right position.

## Claims

1. Seaweed guard device (1) for a fishhook (7) comprising:
- a neck (4) with a longitudinal channel (2) for receiving the shank (10) of a fishhook (7); wherein the neck (4) comprises a first end and a second end; and
- a hook point guard device (1) with a first end and a second end, wherein the first end is mounted on the first end of the neck (4) and wherein the second end extends from the neck (4) and towards the second end of the neck (4);
**characterized in that** the neck (4) further comprises a plurality of slits (3) formed in the first end of the neck (4) along the longitudinal channel (2), wherein the slits (3) are adapted for receiving the bottom part of the eye (8) of a fishhook (7).

2. Seaweed guard device according to claim 1, **characterized in that** the hook point guard device (1) extends from the neck (4) in an arc towards the second end of the neck (4).

3. Seaweed guard device according to claim 1, **characterized in that** the hook point guard device (1) extends from the neck (4) in an arc towards and past the second end of the neck (4).

4. Seaweed guard device according to any one of the claims 1-3, **characterized in that** the longitudinal channel (2) comprises a triangular cross section profile.

5. Seaweed guard device according to any one of the claims 1-4, **characterized in that** the slits (3) form an angle of 90 degrees between each other.

6. Seaweed guard device according to any one of the claims 1-5, **characterized in that** the neck comprises an anchor area (5) adapted for receiving a wire for further fastening of the hook (7).

7. Seaweed guard device according to any one of the claims 1-6, **characterized in that** the hook point guard devices (1) comprise a relatively wide first end and a relatively narrower second end.

8. Seaweed guard device according to any one of the claims 1-7, **characterized in that** the slits (3) cut through the longitudinal channel (2).

9. Use of a seaweed guard device according to any one of the claims 1-8 for protection of the hook (7) of a lure, a jig, a spinner or the like.

10. A lure, a jig, a spinner or the like comprising:
- a hook (7); and
- a seaweed guard device (1) according to any one of the claims 1-8.
